# EUROPÄISCHE PATENTSCHRIFT

(11) **EP 2 427 342 B1**
(45) Veröffentlichungstag und Bekanntmachung des Hinweises auf die Patenterteilung: **11.11.2020**
(21) Anmeldenummer: 10721302.7
(22) Anmeldetag: 26.04.2010
(51) Int. Cl.: H02J 5/00, B60L 53/14

(54) **LADEANORDNUNG FÜR EIN FAHRZEUG UND FAHRZEUG**
CHARGING ARRANGEMENT FOR A VEHICLE AND A VEHICLE WITH SUCH AN ARRANGEMENT
ARRANGEMENT POUR LE CHARGEMENT POUR UN VÉHICULE ET UN VÉHICULE ÉQUIPÉ D'UN TEL ARRANGEMENT

(30) Priorität: 08.05.2009 DE 102009020504
(43) Veröffentlichungstag der Anmeldung: 14.03.2012
(73) Patentinhaber: SEW-EURODRIVE GmbH & Co. KG, 76646 Bruchsal (DE)
(72) Erfinder: MAHLEIN, Jochen, 76139 Karlsruhe (DE); PODBIELSKI, Leobald, 76199 Karlsruhe (DE); EGGER, Björn, 76646 Bruchsal (DE); KOLLAR, Hans, Jürgen, 76646 Bruchsal (DE)
(86) Internationale Anmeldenummer: PCT/EP2010/002553
(87) Internationale Veröffentlichungsnummer: WO 2010/127783

(56) Entgegenhaltungen:
- EP-A1- 0 553 824
- WO-A1-94/09544
- WO-A1-2008/026390
- DE-A1- 4 236 286
- DE-A1- 19 824 290
- JP-A- H05 207 664
- JP-A- 2008 220 130
- LIN C ET AL: "THE INSTALLATION ON PUBLIC AREA OF RECHARGING TERMINALS FOR ELECTRIC VEHICLES" INTERNATIONAL ELECTRIC VEHICLE SYMPOSIUM. ANAHEIM, DEC. 5 - 7, 1994; [INTERNATIONAL ELECTRIC VEHICLE SYMPOSIUM], SAN FRANCISCO, EVAA, US, Bd. SYMP. 12, 5. Dezember 1994 (1994-12-05), Seiten 126-135, XP000488476

## Beschreibung

Die Erfindung betrifft eine Ladeanordnung für ein Fahrzeug und ein Fahrzeug.

Fahrzeuge mit einem batteriegespeisten elektrischen Antrieb sind bekannt. Dieser Energiespeicher muss nach Entleerung elektrisch beladen, insbesondere also aufgeladen, werden.

Aus der WO 2008/026390 A1 ist eine Ladeanordnung bekannt, bei der Diebstahl eines Objekts verhinderbar ist.

Aus der DE 42 36 286 A1 ist eine Anordnung zum automatischen berührungslosen Laden bekannt.

Aus der WO 94/09544 A1 ist ein kontaktloses Batterieladesystem bekannt.

Aus der DE 198 24 290 A1 ist ein Übertragungssystem zum Aufladen von Traktionsbatterien an Bord eines Elektrofahrzeugs im Stand oder während der Fahrt bekannt.

Aus der EP 0 553 824 A1 ist ein elektrisches System für ein Elektrofahrzeug bekannt.

Aus der JP H05 207664 A ist eine Ladeanordnung bekannt.

Aus der JP 2008 220130 A ist eine Leistungsversorgung für ein Fahrzeug bekannt.

Aus der JP 05207664 A ist als nächstliegender Stand der Technik ein Elektroauto bekannt.

Der Erfindung liegt daher die Aufgabe zugrunde, die Beladung zu vereinfachen.

Erfindungsgemäß wird die Aufgabe bei der Ladeanordnung nach den in Anspruch 1 und bei dem Fahrzeug nach den in Anspruch **8** angegebenen Merkmalen gelöst.

Wichtige Merkmale der Erfindung bei der Ladeanordnung für ein Fahrzeug, dessen Energiespeicher elektrisch beladbar ist, sind, dass am Fahrzeug, insbesondere am Gehäuse des Fahrzeugs, zumindest zwei Energieaufnahmemittel zur Beladung des Energiespeichers vorgesehen sind,
wobei ein erstes Energieaufnahmemittel als Steckverbinderteil ausgeführt ist, an das ein Gegensteckverbinderteil elektrisch verbindbar ist zur Beladung,
wobei zumindest ein zweites Energieaufnahmemittel eine Beladung über eine galvanische Trennung ermöglicht.

Von Vorteil ist dabei, dass verschiedene Arten der Beladung ausführbar sind. Einerseits ist eine galvanisch getrennte Beladung und andererseits eine Beladung ohne galvanische Trennung ausführbar. Darüber hinaus ist bei der letztgenannten Beladung eine hohe Ladeleistung, also auch ein hoher Ladestrom, erreichbar, da ein Drehstromanschluss ermöglicht ist. Dieser ist beim öffentlichen Versorgungsnetz weit verbreitet, also breit verfügbar, und weist eine hohe Leistung auf, insbesondere im Vergleich zur einphasigen Versorgung. Aber auch eine einphasige Versorgung ist mittels eines entsprechenden Steckverbinders ausführbar an dieser Drehstromsteckverbinderschnittstelle. Die einphasige Versorgung ist in jedem Haushalt einfach verfügbar und somit noch weiterverbreitet, wobei allerdings die Ladezeit erhöht ist gegenüber der Drehstrombeladung.

Alternativ oder zusätzlich ist auch die induktive Übertragung von Energie mittels des zweiten Energieaufnahmemittels ermöglicht. Dabei ist die Beladung über eine galvanische Trennung ermöglicht und somit eine erhöhte Sicherheit erreichbar. Des Weiteren ist es ermöglicht Spannungsquellen anzuschließen, die eine höhere oder niedrigere Spannung aufweisen als für das Beladen notwendig. Denn der Ladestrom wird durch einen Tiefsetzsteller, insbesondere Buck-Konverter, und nachfolgend durch die Statorinduktivität des Motors und den nachfolgenden Wechselrichter geleitet. Letzterer ist mittels entsprechender Taktung seiner Schalter in Zusammenwirkung mit den Statorinduktivität als Hochsetzsteller verwendbar beim Ladevorgang. Somit ist die jeweils verfügbare Spannung verwendbar zur Herstellung der jeweils gewünschten Ladespannung.

Wichtiger Vorteil ist auch, dass die Frequenz der Versorgungsspannungsquelle, also Netzfrequenz, verschiedene Werte einnehmen darf, also ebenfalls in einen weiten Bereich von Frequenzen fällt. Insbesondere ist also eine Versorgungsspannung verwendbar, die eine Wechselspannung von 50 oder 60 Hz zur Verfügung stellt.

Darüber hinaus ist ein Schutz gegen Fehler erreichbar. Denn wenn der Tiefsetzsteller durchlegiert werden sollte und somit der Ladestrom von einer zu hohen Spannung angetrieben würde, ist nach Erkennung dieses Fehlerfalls der Wechselrichter als Kurzschließer zum Ableiten des Ladestroms von der zu ladenden Batterie weg verwendbar. Dieser Kurzschluss hat ein Auslösen der Sicherungen im Öffentlichen Versorgungsnetz zur Folge. Die Schalter des Wechselrichters sind hierzu robust genug ausgelegt.

Mittels des zweiten Energieaufnahmemittels und der galvanischen Trennung ist also eine sicherheitsgerichtete Weitspannungs-Versorgung ermöglicht.

Bei einer vorteilhaften Ausgestaltung ist das Gegensteckverbinderteil als Drehstromsteckverbinderteil ausgeführt oder als Steckverbinderteil für einphasige Netzversorgung, insbesondere so, dass das Fahrzeug direkt aus dem öffentlichen Versorgungsnetz versorgbar und der Energiespeicher beladbar ist. Von Vorteil ist dabei, dass verschiedene Spannungsquellen verwendbar sind zum Beladen.

**Erfindungsgemäß** umfasst ein zweites Energieaufnahmemittel zumindest eine Sekundärwicklung, die mit einem Primärleiter induktiv koppelbar ist. Von Vorteil ist dabei, dass eine galvanisch getrennte Versorgung ermöglicht ist, also auch eine Versorgung im Nassbereich, wie beispielsweise Waschanlage oder dergleichen. Außerdem ermöglicht die induktive Beladung eine manipulationssichere Beladung. Denn eine steckverbinderkabelgebundene Versorgung ist leicht entfernbar und mit einem anderen Fahrzeug verbindbar. Wenn jedoch die Sekundärwicklung an der Unterseite des Fahrzeugs angebracht ist und der Primärleiter stationär im Boden positioniert ist, ist eine Manipulation, wie beispielsweise Ableiten von Energie an ein anderes Fahrzeug, nur schwer ausführbar.

Bei einer vorteilhaften Ausgestaltung ist eine Sekundärwicklung um ein Kernteil, insbesondere um ein in den Außenbereich des Fahrzeuges herausragend ausgebildetes Kernteil, herum ausgeführt, auf das ein Primärleiter, insbesondere als Primärwicklung, aufsteckbar ist, insbesondere zur induktiven Kopplung an die Sekundärwicklung. Von Vorteil ist dabei, dass in einfacher Weise eine induktive und somit sichere Beladung ausführbar ist, wobei die primärseitige Spannungsquelle eine Spannung aus einem weiten zulässigen Spannungsbereich sein darf.

**Erfindungsgemäß** ist ein Primärleiter stationär verlegt, insbesondere bodenverlegt, vorgesehen, insbesondere wobei eine weitere Sekundärwicklung des Fahrzeugs induktiv koppelbar ist mit dem Primärleiter, insbesondere wobei der Primärleiter als langgestreckte Primärleiterschleife ausgeführt ist. Von Vorteil ist dabei, dass nicht nur beim Parken, sondern auch beim Fahren eine Beladung ausführbar ist.

Bei einer vorteilhaften Ausgestaltung ist eine mechanische Anordnung zur Abstandsverringerung zwischen Primärleiter und Sekundärwicklung vorgesehen, insbesondere am Fahrzeug und/oder stationär. Von Vorteil ist dabei, dass auf diese Weise die Kopplung verbesserbar ist, wobei die mechanische Anordnung entweder fahrzeugseitig oder stationär vorsehbar ist. Die mechanische Anordnung ist in einfacher Weise mit einem Aktor ausführbar oder sogar nur mit einem Federelement. Somit ist die Verfahrbewegung kostengünstig und einfach realisierbar.

**Erfindungsgemäß** wird der am ersten und am zweiten Energieaufnahmemittel aufgenommene Strom jeweils einem Gleichrichter zugeführt und die Ausgangsseiten der Gleichrichter sind parallelgeschaltet, wobei die jeweils gleichgerichteten Ströme zusammengeführt und einem Sternpunkt zumindest teilweise zugeführt werden. Von Vorteil ist dabei, dass ohne besonderen Schaltungsaufwand mehrere verschiedenartige Versorgungsquellen verwendbar sind und die jeweiligen Ströme zusammenführbar sind. Die verschiedenen Versorgungsquellen sind also auch gleichzeitig betreibbar und somit noch höhere Ladeströme erreichbar.

Bei einer vorteilhaften Ausgestaltung ist zwischen Sternpunkt und den parallelgeschalteten Ausgangsseiten der Gleichrichter eine Tiefsetzstellerschaltung angeordnet. Von Vorteil ist dabei, dass die Versorgungsspannung eine höhere Spannung aufweisen darf als die jeweils gewünschte Ladespannung. Dabei ist die Tiefsetzstellerschaltung in einfacher Weise als Buck-Konverter ausführbar.

Bei einer vorteilhaften Ausgestaltung wird der Ladestrom über die Statorwicklungen des Motors und einen weiteren Gleichrichter dem Energiespeicher zugeführt, insbesondere wobei der Gleichrichter von einem pulsweitenmoduliert ansteuerbaren Wechselrichter umfasst ist, aus dem die Statorwicklungen des Motors speisbar sind. Von Vorteil ist dabei, dass auch ein Hochsetzen der Spannung ausführbar ist, insbesondere mittels entsprechend getakteter Ansteuerung der Schalter des Wechselrichters. Also darf die Versorgungsspannung niedriger sein als die jeweils gewünschte Ladespannung. Dabei werden für das Hochsetzen keine weiteren zusätzlichen Teile benötigt als die sowieso schon zum Antreiben des Motors verwendeten.

**Erfindungsgemäß** sind die Energieaufnahmemittel an verschiedenen Seiten des Fahrzeugs vorgesehen, insbesondere, dass ein Energieaufnahmemittel an der Unterseite und zumindest ein weiteres an einer Seitenfläche, insbesondere also nicht Unterseite, vorgesehen ist. Von Vorteil ist dabei, dass somit eine Versorgung mittels verschiedener Systeme ermöglicht ist. Beispielsweise ist an der Seitenfläche einer Benzin-Betankung gleich eine Primärleiterwicklung zuführbar, mit der eine Sekundärwicklung induktiv koppelbar ist. Andererseits ist an der Unterseite eine Beladung aus einem bodenverlegten System ermöglicht, insbesondere also nicht nur aus einer Parkposition, sondern auch beim Fahren.

Bei einer vorteilhaften Ausgestaltung sind die Gleichrichter in einer flüssigkeitsgekühlten Einheit angeordnet sind, wobei die Wärme der Gleichrichter an die Kühlflüssigkeit, insbesondere Wasser, abführbar ist und die zur Flüssigkeitskühlung zugehörige Kühlmittelpumpe aus dem Energiespeicher versorgt ist. Von Vorteil ist dabei, dass hohe Leistungen zuführbar sind und an Stellen, an denen eine Verlustenergie entsteht, eine Kühlung erfolgen kann. Dabei ist ein erster Zeitabschnitt ohne Kühlung unkritisch, da kritische Temperaturen erst nach einer gewissen Zeit erreicht werden.

Bei einer vorteilhaften Ausgestaltung weist der Energiespeicher eine Leerlaufspannung von mehr als 100 Volt, insbesondere weniger als 400 Volt, auf. Von Vorteil ist dabei, dass eine sichere Abtrennung und Isolierung des Hochspannungsteils vom Bediener und den von ihm berührten Teilen ausführbar ist. Insbesondere ist hierzu die galvanische Trennung vorteilhaft.

Bei einer vorteilhaften Ausgestaltung sind die Energieaufnahmemittel jeweils mittels eines am Fahrzeug bewegbar angeordneten Verschlussteils abdeckbar, insbesondere wobei auch das Kernteil abgedeckt ist. Von Vorteil ist dabei, dass eine Sicherung gegen Verschmutzung vorgesehen ist. Außerdem ist die Abdeckung auch bei eingelegtem Primärleiter verschließbar und verbessert mittels der in ihr vorsehbaren Ferritteile den Fluss, insbesondere verringert sie also den Streufluss und somit Verluste.

Wichtige Merkmale bei dem Fahrzeug sind, dass es eine vorgenannte Ladeanordnung aufweist. Von Vorteil ist dabei, dass verschiedene Sorten von Beladung ausführbar sind. Insbesondere ist ein Beladen mittels Drehstromstecker ermöglicht, also eine hohe Ladeleistung und somit eine Schnellladung ausführbar. Darüber hinaus ist aber auch eine Beladung aus dem einphasigen Netz ausführbar, wobei dann allerdings keine Schnellladung ausführbar ist. Des Weiteren ist eine Beladung während der Fahrt ausführbar über die induktive Kopplung mit einem bodenverlegten Primärleiter. Hierbei ist der bodenverlegte Primärleiter sogar als Spurführung für das Fahrzeug verwendbar, wobei geeignet ausgeführte Mittel zur Erkennung des Primärleiters im Fahrzeug vorzusehen sind. Unter Verwendung des gleichen zugehörigen Gleichrichters ist auch eine induktive Beladung, also ebenfalls galvanisch getrennte Beladung, ausführbar, indem sozusagen eine induktive "Zapfpistole" verbindbar.

Bei einer vorteilhaften Ausgestaltung ist der Motor der Antriebsmotor des Fahrzeuges. Von Vorteil ist dabei, dass der Antriebsmotor in doppelter Verwendung verwendbar ist. Einerseits ist er zum Antrieb geeignet ausgeführt und andererseits werden die Statorinduktivität, also die Statorwicklungen, des Motors beim Beladen für eine Glättung des Ladestroms verwendet. Darüber hinaus sind die Statorinduktivität auch zum Anpassen der Ladespannung an den jeweiligen zum Laden optimalen Wert verwendbar.

Weitere Vorteile ergeben sich aus den Unteransprüchen.

Die Erfindung wird nun anhand von Abbildungen näher erläutert:

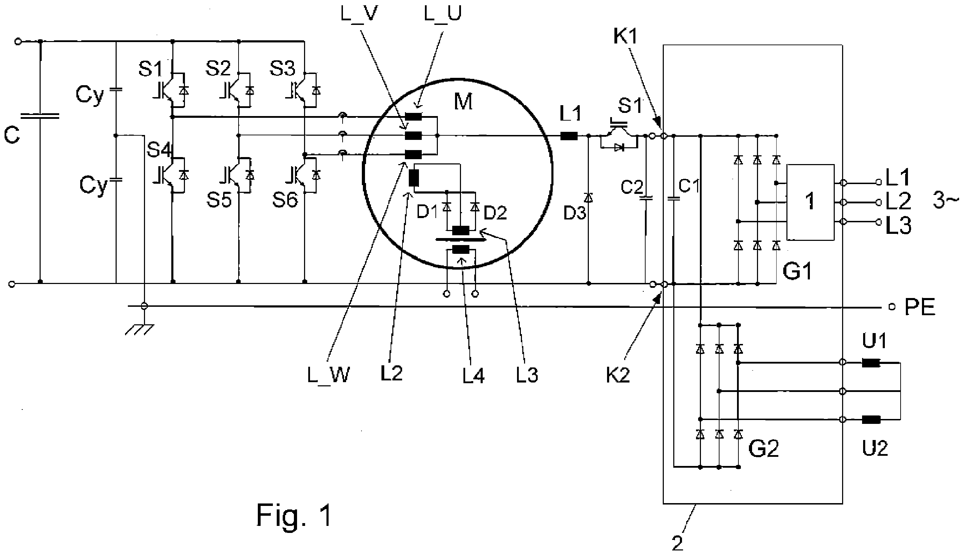

In der Figur 1 ist der wesentliche Teil des elektrisch betreibbaren Fahrzeuges gezeigt.

Hierbei ist der Motor M als Drehstrommotor ausgeführt, dessen Drehstromwicklung die Statorwicklungen (L_U, L_V, L_W) umfasst, die von einem Wechselrichter gespeist werden. Der Wechselrichter umfasst drei Halbbrücken mit Schaltern (S1, S2, S3, S4, S5, S6), die von einer nicht dargestellten Steuerelektronik mit pulsweitenmodulierten Ansteuersignalen angesteuert werden. Der Steuerelektronik werden außerdem die erfassten Werte der drei Phasenströme zugeführt, also die erfassten Werte der die Statorwicklungen (L_U, L_V, L_W) durchfließenden Ströme. Somit ist eine Regelung von Drehzahl und/oder Drehmoment des Motors M mittels der Steuerelektronik ausführbar.

Der Wechselrichter wird aus dem Energiespeicher C und den Kondensatoren Cy versorgt. Der Energiespeicher umfasst zumindest eine Hochvoltbatterie mit einer Batterie-Leerlaufspannung von mehr als 100 Volt, insbesondere 200 Volt bis 430 Volt.

Der Motor M ist als fremderregter Synchronmotor ausgeführt, der eine auf dem Rotor angeordnete Erregerwicklung L2 aufweist. Die Erregerwicklung L2 ist aus einem induktiven Drehübertrager versorgt. Hierzu wird eine stationär angeordnete Primärinduktivität des Drehübertragers mit einem Wechselstrom beaufschlagt, so dass in der mit dem Rotor drehfest verbundenen Sekundärinduktivität L3 eine entsprechende Spannung induziert wird und der zugehörige Sekundärstrom über die als Gleichrichter wirksamen Dioden D1 und D2 der Erregerwicklung zugeführt wird.

Dabei ist die Sekundärwicklung L3 mit einer Mittelanzapfung ausgeführt, so dass der rückgeführte Strom dort eingespeist wird und den Dioden D1 und D2 jeweils nur ein halb so großer Strom zugeführt wird.

Die Statorwicklungen (L_U, L_V, L_W) des Motors M sind in Sternpunktschaltung verschaltet.

Zur Beladung des Energiespeichers C wird der Ladestrom aus verschiedenen Quellen an das Fahrzeug zuführbar.

Eine erste Quelle ist das Drehstromversorgungsnetz 3∼, welches am Drehstromanschluss (L1, L2, L3) anzuschließen ist. Statt aller drei Phasen wäre auch Energie einphasig zuführbar, wobei dann allerdings die Ladezeit erheblich größer ist.

Über Entstörmittel 1 gelangt die über die Anschlussklemmen (L1, L2, L3) zugeführte Energie zum Gleichrichter G1, dessen Ausgangsspannung, also der zwischen den Klemmen K1 und K2 anliegenden Spannung, vom Kondensator C1 geglättet wird, der ebenfalls wie der Gleichrichter G1 und die Entstörmittel 1 in einer wassergekühlten Anschlussbox angeordnet ist.

Der weitere Glättungskondensator C2 ist im Fahrzeug angeordnet. Der auf diese Weise geglättete Ladestrom wird über den Tiefsetzsteller, bestehend Schalter S1, Induktivität L1 und Diode D3, dem Sternpunkt des Motors M geführt, so dass die Spannung auf den jeweilig gewünschten Ladespannungswert bringbar ist.

Beim Laden werden die Schalter des Wechselrichters geöffnet, so dass die zu den Schaltern jeweils vorgesehenen Freilaufdioden als Gleichrichter wirken.

Somit werden die Statorwicklungen zum weiteren Glätten verwendet und erhöhen auch die im Tiefsetzsteller wirksame Induktivität. Bei geeigneter Auslegung und Dimensionierung kann sogar die Induktivität L1 sehr klein werden oder entfallen, so dass die Statorwicklungen als Induktivität des Tiefsetzstellers wirksam sind.

Innerhalb der Anschlussbox 2 ist an den Klemmen K1 und K2 auch die Ausgangsseite eines Gleichrichters G2 angeschlossen, der aus zwei Sekundärwicklungen U1 und U2 speisbar ist, die an verschiedenen Stellen des Fahrzeuges vorgesehen sind und mit einem jeweiligen Primärleiter induktiv koppelbar sind.

Ein erster Primärleiter ist hierzu am Boden unterhalb des Fahrzeuges vorgesehen. In einer weitergebildeten Ausführung ist dieser zum Fahrzeug, insbesondere zur Bodenseite des Fahrzeuges, hin bewegbar mittels einer entsprechend bewegbaren mechanischen Anordnung. Somit ist der Primärleiter, der beispielsweise als Primärwicklung ausführbar ist, induktiv gut ankoppelbar an die Sekundärwicklung U1. Alternativ ist auch die im Fahrzeug angeordnete Sekundärwicklung U1 mittels einer mechanischen Anordnung absenkbar, wobei der Primärleiter im Boden oder an der Oberseite des Bodens verlegt ist.

Ein weiterer Primärleiter ist an einer Seitenfläche des Fahrzeugs mit der Sekundärwicklung U2 induktiv koppelbar. Vorzugsweise ist hierzu die Sekundärwicklung U2 um ein Ferritkernteil vorgesehen, auf das auch der als Primärspule ausgeführte Primärleiter aufsteckbar ist und somit die induktive Kopplung herstellbar ist.

Somit ist sozusagen ein "elektrisches Betanken " des Fahrzeuges über eine induktive Kopplung an der Seitenfläche und auch an der Bodenseite ermöglicht. Bei der seitlichen Betankung ist die "induktive Zapfpistole", also die Primärwicklung, ähnlich bei einer konventionellen Benzinbetankung mit einer Zapfpistole an einer Tankstelle ausführbar.

Bei der bodenseitigen Beladung ist der Primärleiter auch als langgestreckte Primärleiterschleife ausführbar und somit ein Beladen während der Bewegung des Fahrzeugs ausführbar.

Bei einem weiteren erfindungsgemäßen Ausführungsbeispiel werden die Schalter des Wechselrichters auch beim Laden pulsweitenmoduliert angesteuert und somit auch die Ladespannung weiter beeinflussbar, insbesondere zusätzlich zur Beeinflussung durch den Tiefsetzsteller.

Die Anschlussbox ist wassergekühlt ausführbar, wobei die Kühlmittelförderpumpe elektrisch aus dem Energiespeicher versorgt ist. Wenn also der Energiespeicher vollständig entleert ist, ist eine Pumpwirkung nicht erzielbar und somit auch keine besondere Kühlung. Da aber beim Beladen eine kritische Temperatur erst nach einer gewissen Zeitspanne erreicht wird, ist die Beladung des Energiespeichers startbar und dann die Pumpe einschaltbar, wobei der Ladestrom zum Beladen des Energiespeichers reduziert ist um die Stromaufnahme der Pumpe. Mittels der Kühlung der Anschlussbox sind also die Gleichrichter G1 und G2 sowie die Entstörmittel 1 kühlbar.

### Bezugszeichenliste

1 Entstörung
2 Wassergekühlte Anschlussbox
U1 erste Sekundärwicklung
U2 zweite Sekundärwicklung
L1, L2, L3 Drehstromanschluss
G1 Gleichrichter für Drehstrom
G2 Gleichrichter für Sekundärstrom
C1 Glättungskondensator
C2 Glättungskondensator
K1 Anschlussklemme
K2 Anschlussklemme
S1 Schalter
L1 Induktivität
L2 Erregerwicklung
L3 Sekundärinduktivität des Drehübertragers
L4 stationär angeordnete Primärinduktivität des Drehübertragers
L_U Statorwicklung
L_V Statorwicklung
L_W Statorwicklung
D1 Diode
D2 Diode
D3 Diode
M Motor
S1, S2, S3, S4, S5, S6 Schalter der Brückenzweige des Wechselrichters
Cy Kondensator
C Kondensator und Energiespeicher

## Patentansprüche

1. Ladeanordnung für ein Fahrzeug,
dessen Energiespeicher elektrisch beladbar ist, aus dem ein Drehstrommotor des Fahrzeuges versorgbar ist,
wobei am Fahrzeug, insbesondere am Gehäuse des Fahrzeugs, zumindest zwei Energieaufnahmemittel zur Beladung des Energiespeichers vorgesehen sind,
wobei ein erstes Energieaufnahmemittel als Steckverbinderteil ausgeführt ist, an das ein Gegensteckverbinderteil elektrisch verbindbar ist zur Beladung,
wobei der am ersten Energieaufnahmemittel aufgenommene Strom einem Gleichrichter (G1) zugeführt wird, wobei der gleichgerichtete Strom einem Sternpunkt des Drehstrommotors zumindest teilweise zugeführt werden,
wobei zwischen Sternpunkt und den parallelgeschalteten Ausgangsseiten der Gleichrichter (G1) eine Tiefsetzstellerschaltung angeordnet ist,
wobei der Ladestrom über die Statorwicklungen (L_U, L_V, L_W) des Motors und einen weiteren Gleichrichter (S1-S6) dem Energiespeicher zugeführt wird, insbesondere
wobei der Gleichrichter (S1-S6) von einem pulsweitenmoduliert ansteuerbaren
Wechselrichter umfasst ist, aus dem die Statorwicklungen (L_U, L_V, L_W) des Motors speisbar sind,
insbesondere wobei der Wechselrichter als Hochsetzsteller verwendbar ist in Zusammenwirkung mit einer oder mehreren der Statorwicklungen (L_U, L_V, L_W),
**dadurch gekennzeichnet, dass**
ein zweites Energieaufnahmemittel zur Beladung des Energiespeichers vorgesehen ist,
wobei zumindest das zweite Energieaufnahmemittel eine Beladung über eine galvanische Trennung ermöglicht,
wobei der am ersten und zweiten Energieaufnahmemittel aufgenommene Strom jeweils einem Gleichrichter (G1, G2) zugeführt wird und die Ausgangsseiten der Gleichrichter (G1, G2) parallelgeschaltet sind,
wobei **das zweite** Energieaufnahmemittel zumindest eine Sekundärwicklung (U1) umfasst, die mit einem Primärleiter induktiv koppelbar ist,
wobei der Primärleiter stationär verlegt, insbesondere bodenverlegt, vorgesehen ist, wobei die Sekundärwicklung (U1) induktiv koppelbar mit dem Primärleiter vorgesehen ist, insbesondere wobei der Primärleiter als langgestreckte Primärleiterschleife ausgeführt ist,
**wobei** das erste und zweite Energieaufnahmemittel an verschiedenen Seiten des Fahrzeugs vorgesehen sind, ein Energieaufnahmemittel an der Unterseite und zumindest ein weiteres an einer Seitenfläche, also nicht Unterseite, vorgesehen ist.

2. Ladeanordnung nach Anspruch 1,
**dadurch gekennzeichnet, dass**
das Gegensteckverbinderteil als Drehstromsteckverbinderteil ausgeführt ist oder als Steckverbinderteil für einphasige Netzversorgung, insbesondere so, dass das Fahrzeug direkt aus dem öffentlichen Versorgungsnetz versorgbar und der Energiespeicher beladbar ist.

3. Ladeanordnung nach mindestens einem der vorangegangenen Ansprüche,
**dadurch gekennzeichnet, dass**
eine Sekundärwicklung (U1) um ein Kernteil, insbesondere um ein in den Außenbereich des Fahrzeuges herausragend ausgebildetes Kernteil, herum ausgeführt ist, auf das ein Primärleiter, insbesondere als Primärwicklung, aufsteckbar ist, insbesondere zur induktiven Kopplung an die Sekundärwicklung (U1).

4. Ladeanordnung nach mindestens einem der vorangegangenen Ansprüche,
**dadurch gekennzeichnet, dass**
eine mechanische Anordnung zur Abstandsverringerung zwischen Primärleiter und Sekundärwicklung (U1) vorgesehen ist, insbesondere am Fahrzeug und/oder stationär.

5. Ladeanordnung nach mindestens einem der vorangegangenen Ansprüche,
**dadurch gekennzeichnet, dass**
die Gleichrichter (G2) in einer flüssigkeitsgekühlten Einheit angeordnet sind, wobei die Wärme der Gleichrichter (G2) an die Kühlflüssigkeit, insbesondere Wasser, abführbar ist und die zur Flüssigkeitskühlung zugehörige Kühlmittelpumpe aus dem Energiespeicher versorgt ist.

6. Ladeanordnung nach mindestens einem der vorangegangenen Ansprüche,
**dadurch gekennzeichnet, dass**
der Energiespeicher eine Leerlaufspannung von mehr als 100 Volt, insbesondere weniger als 400 Volt, aufweist.

7. Ladeanordnung nach mindestens einem der vorangegangenen Ansprüche,
**dadurch gekennzeichnet, dass**
die Energieaufnahmemittel jeweils mittels eines am Fahrzeug bewegbar angeordneten Verschlussteils abdeckbar sind, insbesondere wobei auch das Kernteil abgedeckt ist,
insbesondere wobei das Verschlussteil an seiner Innenseite Ferritteile aufweist.

8. Fahrzeug mit einer Ladeanordnung nach mindestens einem der vorangegangenen Ansprüche.

9. Fahrzeug nach Anspruch 8,
**dadurch gekennzeichnet, dass**
der Motor der Antriebsmotor des Fahrzeuges ist.

## Claims

1. Charging arrangement for a vehicle,
the energy storage device of which can be electrically charged, a three-phase motor of the vehicle being able to be powered from said energy storage device,
at least two energy absorption means for charging the energy storage device being provided on the vehicle, in particular on the casing of the vehicle,
a first energy absorption means being configured as a plug-in connector part, to which a mating plug-in connector part can be electrically connected for the purpose of charging,
the current absorbed at the first energy absorption mean being supplied to a rectifier (G1), at least part of the rectified current being fed to a star point of the three-phase motor,
a buck converter circuit being arranged between the star point and the output sides of the rectifier (G1), said sides being wired in parallel,
the charging current being supplied to the energy storage device by means of the stator windings (L_U, L_V, L_W) of the motor and an additional rectifier (S1-S6), the rectifier (S1-S6) in particular being comprised by an inverter that can be actuated in a pulse-width-modulated manner and from which the stator windings (L_U, L_V, L_W) of the motor can be fed,
the inverter in particular being able to be used as a boost converter in cooperation with one or more of the stator windings (L_U, L_V, L_W),
**characterised in that**
a second energy absorption means being provided for charging the energy storage device, at least the second energy absorption means enabling charging by means of galvanic isolation,
the current absorbed at the first and second energy absorption means being supplied in each case to a rectifier (G1, G2), and the output sides of the rectifiers (G1, G2) being wired in parallel,
the second energy absorption means comprising at least one secondary winding (U1), which can be inductively coupled to a primary conductor,
the primary conductor being installed in a stationary manner, in particular installed in the ground, the secondary winding (U1) being provided so as to be able to be inductively coupled to the primary conductor, the primary conductor in particular being configured as an the first and second energy absorption means being provided on different sides of the vehicle, one energy absorption means being provided on the underside and at least one other being provided on a side face, i.e. not on the underside.

2. Charging arrangement according to claim 1,
**characterised in that**
the mating plug-in connector part is configured as a three-phase plug-in connector part or as a plug-in connector part for single-phase mains supply, in particular such that the vehicle can be powered directly from the public mains network and the energy storage device can be charged.

3. Charging arrangement according to at least one of the preceding claims,
**characterised in that**
a secondary winding (U1) is configured around a core part, in particular around a core part that is formed so as to protrude into the outer region of the vehicle and onto which a primary conductor can be placed, in particular as a primary winding, in particular for inductively coupling to the secondary winding (U1).

4. Charging arrangement according to at least one of the preceding claims,
**characterised in that**
a mechanical arrangement for reducing the space between the primary conductor and the secondary winding (U1) is provided, in particular on the vehicle and/or in a stationary manner.

5. Charging arrangement according to at least one of the preceding claims,
**characterised in that**
the rectifiers (G2) are arranged in a fluid-cooled unit, the heat of the rectifiers (G2) being able to be carried away to the coolant, in particular water, and the coolant pump associated with the fluid cooling is powered from the energy storage device.

6. Charging arrangement according to at least one of the preceding claims,
**characterised in that**
the energy storage device has an open-circuit voltage of more than 100 V, in particular less than 400 V.

7. Charging arrangement according to at least one of the preceding claims,
**characterised in that**
the energy absorption means can each be covered by means of a closure part movably arranged on the vehicle, the core part in particular also being covered, the closure part in particular having ferrite parts on its inside.

8. Vehicle comprising a charging arrangement according to at least one of the preceding claims.

9. Vehicle according to claim 8,
**characterised in that**
the motor is the drive motor of the vehicle.

## Revendications

1. Arrangement de charge pour un véhicule,
dont l'accumulateur d'énergie peut être chargé électriquement, à partir duquel peut être alimenté un moteur à courant triphasé du véhicule,
au moins deux moyens d'absorption d'énergie destinés à charger l'accumulateur d'énergie se trouvant au niveau du véhicule, notamment au niveau de la carrosserie du véhicule,
un premier moyen d'absorption d'énergie étant réalisé sous la forme d'une partie de connecteur à enfichage à laquelle peut être reliée électriquement une partie de connecteur à enfichage homologue pour la charge,
le courant absorbé au niveau du premier moyen d'absorption d'énergie étant acheminé à un redresseur (G1), le courant redressé étant au moins partiellement acheminé à un point neutre du moteur à courant triphasé, un circuit abaisseur de tension étant disposé entre le point neutre et les côtés de sortie branchés en parallèle du redresseur (G1),
le courant de charge étant acheminé à l'accumulateur d'énergie par le biais des enroulements de stator (L_U, L_V, L_W) du moteur et d'un redresseur supplémentaire (S1-S6), le redresseur (S1-S6) étant notamment composé d'un onduleur qui peut être commandé par modulation d'impulsions en largeur et à partir duquel peuvent être alimentés les enroulements de stator (L_U, L_V, L_W), l'onduleur pouvant notamment être utilisé comme élévateur de tension en coopération avec un ou plusieurs des enroulements de stator (L_U, L_V, L_W),
**caractérisé en ce que**
un deuxième moyen d'absorption d'énergie destiné à charger l'accumulateur d'énergie est présent,
au moins le deuxième moyen d'absorption d'énergie rendant possible une charge par le biais d'une isolation galvanique,
le courant absorbé au niveau du premier et du deuxième moyen d'absorption d'énergie étant respectivement acheminé à un redresseur (G1, G2) et les côtés de sortie du redresseur (G1, G2) étant branchés en parallèle,
le deuxième moyen d'absorption d'énergie comportant au moins un enroulement secondaire (U1) qui peut être couplé inductivement avec un conducteur primaire,
le conducteur primaire étant réalisé posé en position fixe, notamment posé au sol,
l'enroulement secondaire (U1) étant réalisé pour pouvoir être couplé inductivement avec le conducteur primaire, le conducteur primaire étant notamment réalisé sous la forme d'une boucle conductrice primaire étendue en longueur,
les premier et deuxième moyens d'absorption d'énergie étant disposés sur des côtés différents du véhicule, un moyen d'absorption d'énergie se trouvant au niveau du côté inférieur et au moins un autre au niveau d'une face latérale, c'est-à-dire pas le côté inférieur.

2. Arrangement de charge selon la revendication 1, **caractérisé en ce que** la partie de connecteur à enfichage homologue est réalisée sous la forme d'une partie de connecteur à enfichage pour courant triphasé ou sous la forme d'une partie de connecteur à enfichage pour une alimentation par réseau monophasé, notamment de sorte que le véhicule peut être alimenté et l'accumulateur d'énergie peut être chargé directement à partir du réseau de distribution public.

3. Arrangement de charge selon au moins l'une des revendications précédentes, **caractérisé en ce qu'**un enroulement secondaire (U1) est exécuté autour d'une partie de noyau, notamment autour d'une partie de noyau configurée saillante dans la zone extérieure du véhicule, sur laquelle peut être emmanché un conducteur primaire, notamment sous la forme d'un enroulement primaire, en particulier en vue du couplage inductif à l'enroulement secondaire (U1).

4. Arrangement de charge selon au moins l'une des revendications précédentes, **caractérisé en ce qu'**un arrangement mécanique destiné à réduire l'écart entre le conducteur primaire et l'enroulement secondaire (U1) est présent, notamment au niveau du véhicule et/ou en position fixe.

5. Arrangement de charge selon au moins l'une des revendications précédentes, **caractérisé en ce que** le redresseur (G2) est disposé dans une unité refroidie par liquide, la chaleur du redresseur (G2) pouvant être évacuée vers le liquide de refroidissement, notamment de l'eau, et la pompe à fluide de refroidissement associée au refroidissement par liquide est alimentée à partir de l'accumulateur d'énergie.

6. Arrangement de charge selon au moins l'une des revendications précédentes, **caractérisé en ce que** l'accumulateur d'énergie possède une tension à vide supérieure à 100 volts, notamment inférieure à 400 volts.

7. Arrangement de charge selon au moins l'une des revendications précédentes, **caractérisé en ce que** les moyens d'absorption d'énergie peuvent respectivement être recouverts au moyen d'une partie de fermeture montée mobile sur le véhicule, la partie de noyau étant notamment elle aussi recouverte, la partie de fermeture possédant des parties en ferrite sur son côté intérieur.

8. Véhicule comprenant un arrangement de charge selon au moins l'une des revendications précédentes.

9. Véhicule selon la revendication 8, **caractérisé en ce que** le moteur est le moteur de propulsion du véhicule.
